# EUROPEAN PATENT SPECIFICATION

(11) **EP 1 331 133 B1**
(45) Date of publication and mention of the grant of the patent: **27.12.2006**
(21) Application number: 03001648.9
(22) Date of filing: 24.01.2003
(51) Int. Cl.: B60P 1/02, B60P 1/64

(54) **Self-propelled truck for handling and transporting bins**
Selbstfahrendes Fahrzeug zum Handhaben und Transportieren von Kisten
Véhicule automobile pour la manipulation et le transport de caisses

(30) Priority: 29.01.2002 IT TN20020001
(43) Date of publication of application: 30.07.2003
(73) Proprietor: Odorizzi, Diego, 38023 Cles (Trento) (IT)
(72) Inventor: Odorizzi, Diego, 38023 Cles (Trento) (IT)
(74) Representative: Reniero, Cirillo Silvano

(56) References cited:
- WO-A-20/04080755
- GB-A- 1 264 793
- US-A- 3 018 905
- US-A- 4 155 471

## Description

The present invention relates to a self-propelled truck for handling bins according to the preamble of claim 1, for example for picking fruit along rows of fruit trees and transporting them from an orchard to a harvest storehouse. It relates as well to a method of handling bins with such a truck.

Various types of self-propelled bin-carrying trucks for picking fruit in an orchard have already been proposed, as for example in US-3 018 905, which discloses a mobile power-operated bin handling and transporting vehicle. Other trucks are provided with a front fork for lifting a bin from the ground and transferring it then to a loading platform of the truck, where it is in a handy position to receive fruit picked by pickers on board of the truck. The truck is also provided with a rear lowering fork arranged to lower bins filled with fruit from the loading platform to the ground, thereby making it possible for the front fork to lift one or more new empty bins to the loading platform in order to proceed with the fruit picking operation

A serious drawback of such known trucks is that, in case empty or full bins have been placed or lie alongside a row of trees for any reason whatsoever, the truck cannot advance or in order to do it to advance, the truck must load and unload in sequence, all the bins on its path, which operation can be time-consuming and involve a great waste of energy to be completed.

Self-propelled truck equipped with a filling up device generally termed "automatic bin filler" have been widely used. An "automatic bin filler" substantially comprises one or more conveyor belts radially arranged about a fruit lowering head arranged above a bin to be filled placed. Each piece of fruit picked up by the personnel on the loading platform is placed on a conveyor belt which in turns transfers it to the lowering head to be loaded into the bin located under the lowering head. For a better satisfactory throughput the truck tows a trailer transporting a given number of empty bins that must be transferred sequentially onto the loading platform of the cart for being filled up.

This second type of truck, although making it possible to considerably reduce picking times, it has at least two serious shortcomings, i.e. it is of course much more expensive and cannot not be used in all circumstances, e.g. in hilly orchards as the conveyor belts operate well on flat land, whereas uphill they may fail to feed the pieces of fruit towards the lowering head, which means that the fruit may roll backwards and to get lost or damaged and downhill they may fail to hold the fruits in position, i.e. the fruit may be violently unloaded into the bin and be damaged.

A main object of the present invention is to provide a self-propelled truck structure for picking fruit in an orchard along rows of trees, that can handle empty bins and bins full of fruit, and advance along a row of trees even if one or more bins are found on its path.

Another object of the present invention is to provide a self-propelled truck structure suitable for being used even with an automatic bin filler, but with no need for a towed trailer.

A further object of the present invention is that said self-propelled truck structure is easy to use and handle, highly reliable and suitable for ensuring a high throughput in fruit picking.

These and other objects, which will become better apparent hereinafter are achieved by a self-propelled truck comprising a support chassis or frame, two pairs of wheels arranged on opposite sides of said support chassis, or frame, a steering device and driving means for at least one wheel or pair of wheels, and is characterised in that said support chassis or frame comprises two longitudinal sides spaced from one another, each of which is supported by a respective pair of wheels, at least one pair of transverse members designed to rigidly bridge the said two longitudinal sides at a level higher than that of a bin laying onto the ground and to delimit therewith a longitudinal tunnel, at least one lifting-lowering shaft for at least one bin between the said longitudinal sides, lifting-lowering means being carried by said support chassis or frame at each lifting-lowering shaft and displaceable between a fully lowered position and a fully lifted position, and removable engagement means for a bin, which is rigidly displaceable with said lifting-lowering means and designed to engage with a bin on the ground at the lifting-lowering shaft and to hold it constrained to said lifting-lowering means, whereby the engaged bin is at a level higher than that of a bin laying on the ground while the lifting-lowering means is in fully lifted position; the truck further comprising driving means for said lifting-lowering means and said removable engagement means, and a control unit.

Advantageously, the fully lifted position is at a higher level than the height of a bin.

Further features and advantages of the present invention will become better apparent from the following detailed description of some of specific embodiments thereof, given by way of not limiting example only, with reference to the accompanying drawings, in which:
Figure 1 is a diagrammatic top plan view of a self-propelled truck according to the present invention;
Figure 2 is a cross-sectional view taken along line IV-IV in Fig. 1;
Figure 3 shows a cross-sectional view on a vertical plane taken along line III-III of Fig. 1;
Figure 4 is a diagrammatic perspective top plan view on an enlarged scale of the truck of Fig. 1;
Figure 5 shows a diagrammatic perspective view of a detail on an enlarged scale of Figs. 3 and 4;
Figure 6 is a partly diagrammatic elevation side view of a portion of the side of the truck shown in Fig. 4;
Figure 7 illustrates a general constructional diagram of the bin lifting and lowering means;
Figure 8 shows a perspective view of another embodiment of a removable bin engagement means;
Figure 9 shows an axonometric view on an enlarged scale of a detail of Fig. 7;
Figure 10 is a cross-sectional view of the detail of Fig. 8 some parts of which have been removed;
Figure 11 is a diagrammatic cross-section view along a vertical plane illustrating a truck according to the present invention provided with an automatic bin filler device;
Figure 12 shows a partial top view of the filling device of Fig. 11 some parts of which have been removed; and
Figure 13 is a perspective view of another embodiment of the engagement means of Fig. 8 acting as an additional lifting-lowering means.

In the accompanying drawings the same or similar parts or components have been indicated by the same reference numerals.

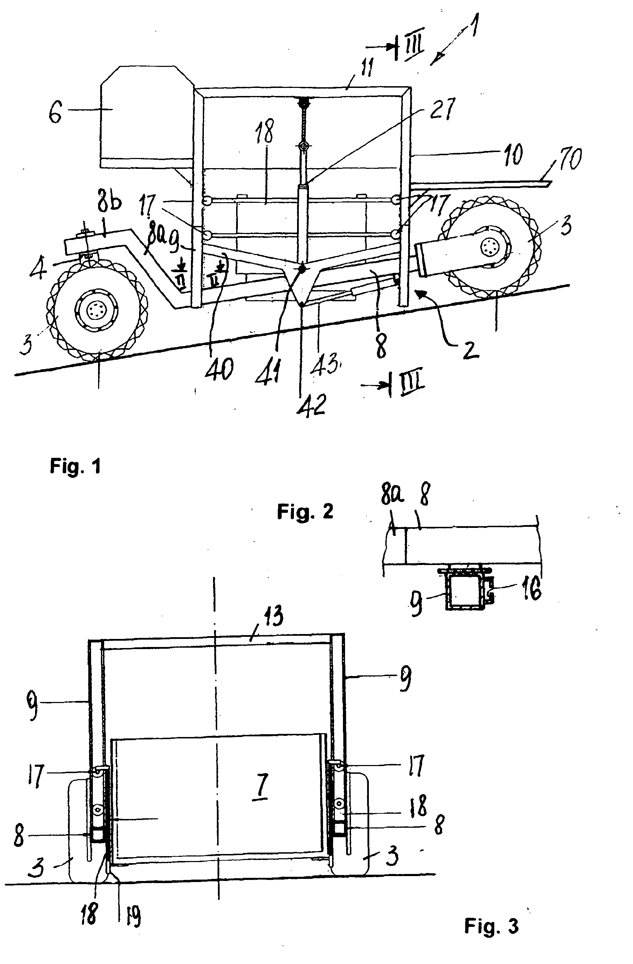

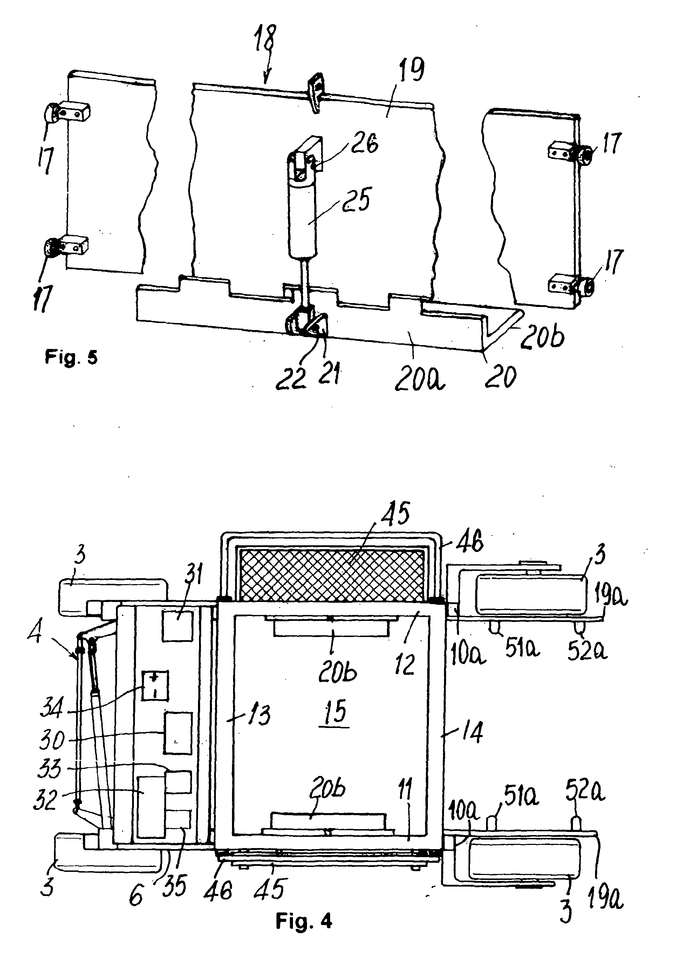

With reference first to Figures 1 to 7, it will be noted that a self-propelled truck or cart according to the present invention, generally designated at 1, is formed by a support chassis or frame 2 mounted on two pairs of wheels 3, preferably tired wheels, arranged on opposite sides of the support chassis 2, a steering device 4 (Fig. 4) of any suitable type, and driving means, e.g. comprising a hydraulic driving assembly 5 which is designed to drive one or both pairs of wheels 3 and received in a housing 6 located in an elevated position on the chassis 2.

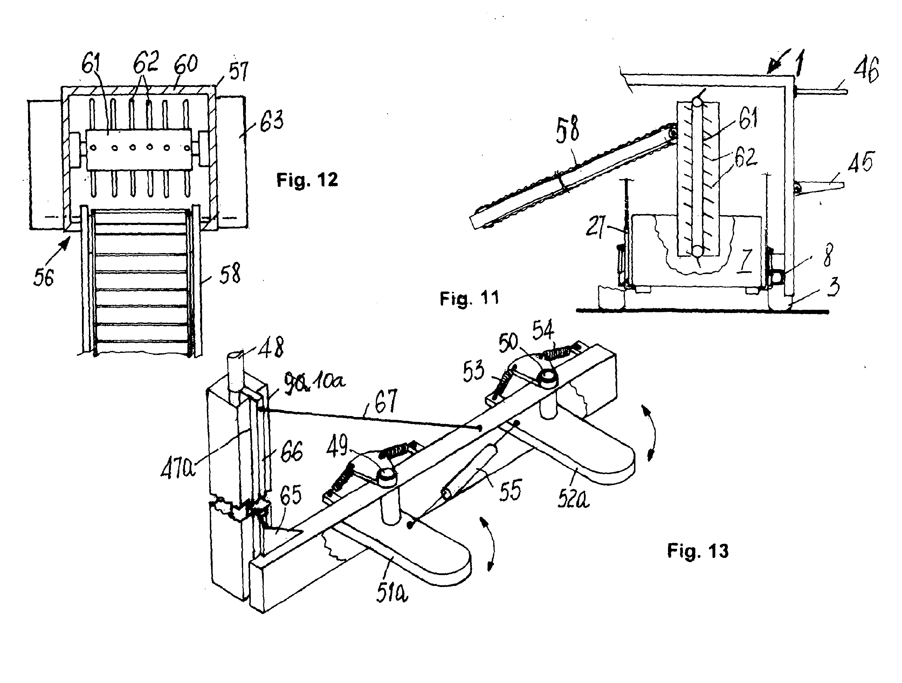

More particularly, the support chassis 2 comprises two longitudinal sides spaced from each other for a width slightly greater than the width of a standard bin 7 (Figs. 3 and 11) that truck 1 is designed to handle and transport. Each longitudinal side comprises at least one main longitudinal metal member 8, preferably of tubular structure (Figs. 1 and 2), which can have, at one of its ends an inclined portion 8a extending uphill, in use, e.g. extending to a level higher than the diameter of wheels 3 and, at its other end a transverse portion 8c extending outwards over a respective wheel 3, followed by a longitudinal portion parallel to the body of the longitudinal member to which a wheel 3 is pivoted. Between the sections 8a and 8b of the two longitudinal members the steering device 4 is located, which can be controlled by a control steering column driven by a wheel or a crank in any suitable way.

A pair of side uprights 9 and 10, preferably tubular in structure, rise from each longitudinal member 8, preferably with a square cross-section as shown in in Fig. 2. Uprights 9 and 10 are rigidly connected, e.g. welded, to two respective longitudinal member 11 and 12 which are in turn rigidly connected at their ends to respective transverse elements 13 and 14 (Fig. 4), thereby rigidly bridging the two sides of the truck and delimiting therewith a longitudinal tunnel extending throughout the length of the truck. Between the longitudinal elements 11 and 12 and the transverse members 13 and 14 a lifting-lowering shaft 15 for a bin 7 is delimited as further explained below.

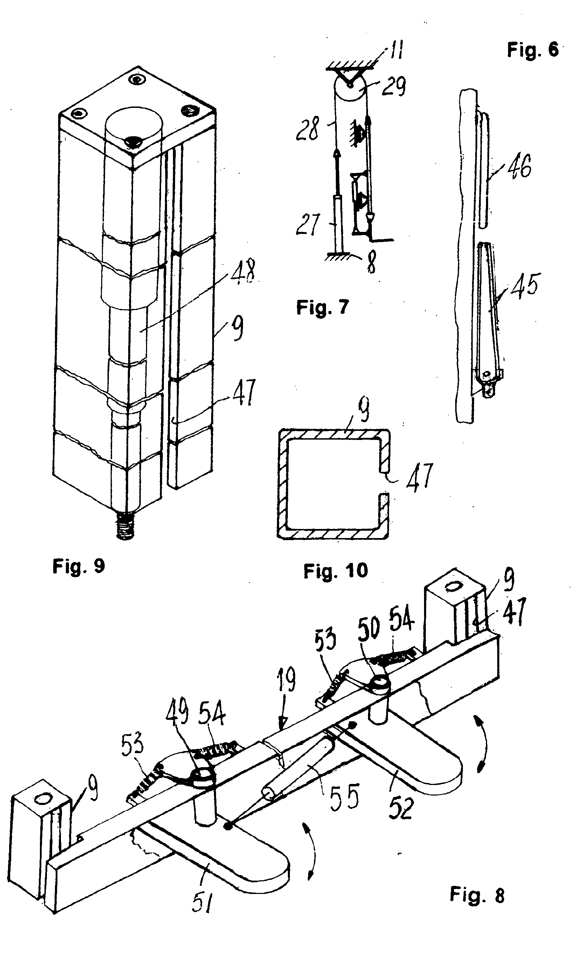

As better illustrated in Fig. 2, each upright of the two pairs of tubular uprights 9 and 10 delimits, on its side facing the other upright, a longitudinal sliding guide 16 in which either a shoe or a pair of rollers 17 can roll, that are part of their respective carriage 18 which is thus slidable along its respective upright 9, 10. The two carriages 18 located on the same side of the truck are rigidly connected to each other by a lower longitudinal element 19 which supports suitable means for releasably engaging a bin 7 placed at shaft 15. As shown in Fig. 6, the engagement means can comprise a section bar or stirrup 20, one wing 20a of which is pivoted about a horizontal articulation axis to its respective longitudinal member 19. The stirrup 29 is articulated on its rear side to one end of a linear actuator, e.g. an oil operated jack 23, by means of two lugs 21 supporting a pin 22. The other end of jack 23 is articulated at 26 to the lower longitudinal element 19, so that when the jack is extended, the wing 20a of the stirrup 20 is arranged in substantial alignment with the longitudinal element, whereas when it is retracted, the wing 20a extends into shaft 15 underneath bin 7 located in the shaft 15 and the other fin 20b of the stirrup is moved in substantial alignment with the longitudinal element 19.

On each side of the truck a respective oil operated cylinder 27 is also provided, acting as a means for lifting-lowering a carriage 18. To this end, cylinder 27 has its lower end articulated to its respective carriage 18 and its upper end articulated to a longitudinal member 11, 12. According to another embodiment, each oil operated cylinder 27 has its lower end secured to its respective longitudinal member 8 (Fig. 7) and its other end constrained to one end of a rope or chain 28 wound around a pulley 29 carried by a longitudinal member 11, 12, the other end of the rope 28 being connected to a carriage 18.

With an arrangement as described above, each carriage 18 can be moved along one side of the shaft 15 and stopped formed in the shaft at a predetermined level and then further lifted or lowered according to the specific requirements. Once the truck 1 has been displaced so that its shaft 15 is brought at a bin 7, above which the truck 1 can be freely moved since the space between the sides of the truck is fully clear throughout the tunnel from any obstacle, jacks 25 are first energized in a way that will be further explained below, so that the stirrups are brought to their working positions, i.e. with their fins 20b overhangingly extending below bin 7 so that when cylinders 27 are subsequently actuated, they engage the bin 7 from below, thereby lifting it, e.g. to a level slightly higher than the standard height of the bins 7, and thus truck 1 can move forward with a bin loaded on it, even above other bins 7 on the ground along its path.

In order to drive the various parts of truck 1, housing 6 locates a pump 30 for driving gears 3 and a pump 31 for lifting the carriages 18. The two pumps 30 and 31 are connected to a hydraulic circuit comprising an oil tank 3 provided with a filter 33 (Fig. 4) and can be powered either by an electric engine fed by an electric battery 34 or by a thermal motor of any suitable type. The whole assembly is controlled by an electronic control unit 35. Preferably, various controls available to the operator are arranged together in a control panel, not shown in the drawings, which can be located in any suitable position on trick 1, e.g. on one side of housing 6.

In the embodiment shown in Fig. 1, each truck side instead of being rigidly fixed to its respective longitudinal member 8, is pivoted to a horizontal pin 40 by means of an auxiliary longitudinal member 41 shaped as a three armed balance, which is rigidly fixed to the two uprights 9 and 10, respectively, at the end of two arms thereof, whereas the end of its third arm is articulated at 42 to an oil operated jack 43, the other end of which is fixed to a longitudinal member 8 in any suitable way. Jack 43 is connected to the hydraulic circuit of the truck and it is controlled by the electronic control unit 35, in turn, controlled by an inclination measuring device of any suitable type, not shown, so as to hold the truck sides, and thus the load constituted by one or more bins carried by it, in a substantially vertical attitude.

Advantageously, truck 1 can be provided with side platforms 45 (Figs. 4 and 6), preferably of a collapsible type, i.e. overturning against its side, and with a parapet 46, also preferably overturning, to allow the picker personnel to safely stand on the truck 1.

Moreover, according to the embodiment shown in Figures 8 to 10, uprights 9 and 10 are tubular in shape with a C-shaped (square) cross-section, as shown in Fig. 10, and are provided with a longitudinal slot 47. Within each upright 9 and 10 a respective oil operated jack 48 is housed which has one end, e.g. its upper end fixed to the end of its respective upright 9, 10 (Fig. 9) and its other end is constrained to one end of a lower longitudinal element 19, e.g. through a bracket not shown in the drawings, which advantageously consists of a tubular member (Fig. 8). Each time the two jacks 48 of each pair of uprights 9 and 10 are retracted or extended, their respective longitudinal element 19 will be lifted or lowered accordingly, thereby acting as a carriage 18.

To this end, a pair of flat brackets 51 and 42 are pivoted about a vertical pin 49 and 50, respectively, and can thus be angularly displaced either in their working position facing towards shaft 15 or aligned with the longitudinal element 19 in their rest position.

Advantageously, each bracket 51 and 52 is resiliently loaded, e.g. by a pair of helical springs 53, 54 designed to hold their respective bracket in its working position, as shown in Fig. 8. Each pair of brackets 51, 52 can be controlled by a two piston oil operated jack 55 having its ends articulated to a respective bracket and controlled by the control panel. Preferably the jack 55 is arranged in its respective longitudinal element19 as diagrammatically shown in Fig. 8. Brackets 51 and 52, however, can be controlled by any other suitable control means.

In the embodiment shown in Figures 11 and 12 a self-propelled truck 1 according to the invention is shown, which is provided with an automatic bin filler 56 which, is structured as a conventional bin filler, since although being provided with a bin feeding head 57 and one or more conveyor belts 58 radially arranged around it, it has a fixed type head, i.e. the height of the bin feeding head is not adjustable, as with conventional automatic filler devices, as the adjustment of the height from which fruit falls into a bin 7 carried in the shaft 15 is effected by suitably actuating jacks 27, e.g. by means of a feeler pin sensor located at the lower portion of head 57 and designed to generate an output signal to the electronic control unit 35 that in turn will process a control signal for the jacks 27 to adjust the bin height according to requirements.

More particularly head 57 can consist of a tubular body 60 arranged (e.g. hanging) vertically above a bin 7 (Fig. 11) and within which a sector or stake conveyor 61 (Fig. 12) is arranged to receive fruit from conveyor(s) 58 and guide it to bin 7 lying underneath. Advantageously, the conveyor belts 58 and the upright conveyor 61 can be driven by the same power source, e.g. a suitable electrically powered motor (not shown in the drawings), the motion of one conveyor being synchronously transmitted to the other, e.g. by means of a suitable gear drive generally designated at 63.

It will be easily understood from the above description that a self-propelled truck 1 according to the present invention allows a bin 7 to be automatically loaded and handled by lifting or lowering it at its shaft 15 according to requirements both for overtaking one or more bins lying on the truck path and for adjusting the level thereof as the bin is loaded with an increasing amount of material (fruit).

The self-propelled truck described above is susceptible to numerous modifications and variations within the scope of the present invention as defined by the claims.

Thus, as shown in Fig. 1, a bin supporting surface 70 can be provided, which is positioned on the side opposite to the housing 6 with respect to the lifting-lowering shaft 15 and designed to receive an empty or full bin from shaft 15. The unloading surface 70 can comprise e. g. a, preferably motorised roller assembly for easily transferring a bin to it and from it. The height above ground of the surface 70 level must be slightly higher than that of a bin lying on the ground, so that the truck 1 can handle more than one bin. For example, with a self-propelled truck according to the present invention one or more bins lying on the ground can be overtaken even if truck 1 is loaded with a bin lying on the unloading surface 70, and possibly with a bin kept lifted from the ground in shaft 15.

Figures 4 and 13 show the lifting-lowering system illustrated in Figs. 8 to 10 which can be advantageously used for constituting a lifting-lowering means for bins 7 located in place of the supporting surface 70. More particularly, on the side of each of the uprights 10 a tubular upright 10a is provided in which a respective oil operated jack is located designed to lift a longitudinal overhanging element 19a having lower brackets 51a and 52a similar and acting in the same way as brackets 51 and 52. The longitudinal element 19a is secured to the lower end of jack 48, e.g. through a gusset plate 65 slidably guided in and along a longitudinal slit 47a in the upright 10a. If desired, the gusset plate 65 can be strengthened by means of a shim 66 to which one end of a tension rod 67 can be secured, the other end of the tension rod being anchored to the end portion of the longitudinal element 19a.

As better shown in Fig. 4, when a bin is located between two longitudinal elements 19a at two wheel of the truck 1, it can be engaged on two opposite sides by the two pairs of brackets 51a and 52a and can be lifted and lowered similarly to a bin in the shaft 15

Of course, driving of the various movable elements can be of fluid operated, or electrical or mechanical type and motion can be transmitted, e.g. by means of worm screw, mechanical jacks, or any other suitable transmission means.

Moreover, besides being controllable by the control panel, truck 1 can be remote controlled by any suitable type of remote control.

The materials used as well as the dimensions thereof can vary according to the specific requirements.

## Claims

1. A self propelled truck comprising a support chassis or frame(2), two pairs of wheels (3) arranged on opposite sides of said support chassis or frame (2), a steering device (4) and driving means (31) for at least one wheel or pair of wheels (3) and **characterised in that** the said chassis support or frame (2) comprises two longitudinal sides spaced from one other, each of which being supported by a respective pair of wheels (3), at least one pair of transverse members (13, 14) designed to rigidly bridge the said two longitudinal sides at a level higher than that of a bin (7) laying on the ground and to delimit therewith a longitudinal tunnel, at least one lifting-lowering shaft (15) for at least one bin (7) between the said longitudinal sides, lifting-lowering means (27, 48) being carried by said support chassis or frame (2) at each lifting-lowering shaft and displaceable between a fully lowered position and a fully lifted position, and removable engagement means (20, 25; 51, 52; 51a, 52a; 55) for a bin (7), which is rigidly displaceable with said lifting-lowering means (27; 48) and designed to engage a bin (7) on the ground at the lifting-lowering shaft and to hold it constrained to said lifting-lowering means (27; 48) whereby the engaged bin is at a level higher than that of a bin (7) laying on the ground while the lifting-lowering means is in fully lifted position; the truck further comprising, driving means (30) for said lifting-lowering means (27; 48) and said removable engagement means (20, 25; 51, 52; 51a, 52a; 55), and a control unit (35).

2. A truck according to Claim 1, **characterised in that** said support chassis or frame (2) comprises two longitudinal members spaced from one other, each of which comprises at least one longitudinally extending member (8), at least one pair of side uprights (9, 10) and at least one respective longitudinal element (11, 12) designed to rigidly connect with the respective pair of uprights (9 and 10), as well as at least with said two longitudinal elements (13, 14) arranged to bridge said two truck sides and to delimit therewith at least one lifting-lowering shaft (15) for a bin (7).

3. A truck according to Claim 2, **characterised in that** the said lifting-lowering means comprises at least one carriage or slide (18) at each side of said support chassis (2), said carriage or slide (18) being slidably mounted along a respective pair of uprights (9; 10), at least one linear actuator (27; 48) designed to cause a respective carriage or slide (18) to be displaced along a respective lifting-lowering shaft (15).

4. A truck according to claim 3, **characterised in that** the said removable engagement means for engaging a bin (7) comprises a section bar member or stirrup (20) having a pair of wings (20a, 20b) extending normal to each other and pivoted about an articulation axis to a respective longitudinal element (19), a linear actuator (25) for controlling said stirrup (20) to angularly move a wing (20a) of said stirrup (20) between a rest position substantially in alignment with said longitudinal element (19) and a working position, in which said wing (20a) extends inside the shaft (15).

5. A truck according to claim 3, **characterised in that** the said removable engagement means for engaging a bin 7 comprises a pair of brackets (51, 52; 51a, 52a) pivoted with respect to corresponding longitudinal member (19; 19a) thereby being be angularly displaceable between a working position extending within a lifting-lowering shaft and a rest position in alignement with its respective longitudinal element (19, 19a), and a linear actuator (55) for each pair of brackets (51, 52; 51a, 52a).

6. A truck according to Claim 5, **characterised in that** each bracket (51, 52; 51a, 52a) is resiliently loaded by at least one return spring (53, 54).

7. A truck according to any preceding claim 2 to 6, **characterised in that** each truck side is pivoted to a respective longitudinally extending member (8) about a transverse pivotal pin (40) through an auxiliary longitudinal three-armed member (41), having two ends thereof connected to a respective upright (9, 10), whereas the end of its third arm is articulated to one end of a linear actuator (43) whose other end is pivoted to said longitudinally extending member (8), the said linear actuator (43) being controlled by said electronic control unit (35), in turn controlled by an inclination gauge.

8. A truck according to any preceding claim, **characterised in that** it comprises an automatic bin filler (56) comprising a lowering conveyor head (57) not adjustable in height, at least a conveyor belt (58) suitable for conveying to the said conveyor head (57), and driving means for said conveyor head (57) and said at least one conveyor belt (58).

9. A truck according to claim 8, **characterised in that** said conveyor head (57) comprises a tubular body (60) arranged to be located above said bin (7) placed in a lifting-lowering shaft (15), a sector or stake conveyor (61) located in said tubular body (60) and a sensor designed to detect the distance of the material loaded in a bin (7) and said tubular body (60) to control said lifting-lowering means.

10. A truck according to any preceding claim, **characterised in that** it comprises a support plane (70) for a bin (7), said support plane being arranged adjacent to a lifting-lowering shaft (15) to receive a bin (7) from the shaft (15) at a level slightly further up above the ground than that of the bin (7).

11. A truck according to claim 10, **characterised in that** said support plane (70) comprises a roller assembly.

12. A method of handling bins (7) by means of a self-propelled truck according to any preceding claim, comprising the steps of:
- engaging a bin (7) and lifting it from the ground within a lifting-lowering shaft (15),
- lifting said bin (7) to a level substantially higher than that of a bin (7) lying on the ground to make it possible to overtake at least one bin (7) lying on the ground after said lifting operation, and
- lowering said bin (7) from a level substantially higher than that of a bin lying on the ground after said lifting operation, and
- placing said bin (7) on the ground.

## Patentansprüche

1. Selbstfahrendes Fahrzeug mit einem Haltegestell oder Rahmen (2), zwei Paar Rädern (3), die an gegenüberliegenden Seiten des Haltegestells oder Rahmens (2) angeordnet sind, einer Lenkvorrichtung (4) und einer Antriebseinrichtung (31) für mindestens ein Rad oder Paar Räder (3) und **dadurch gekennzeichnet, daß** das Haltegestell oder der Rahmen (2) aufweist: zwei voneinander beabstandete Längsseiten, von denen jede von einem jeweiligen Paar Rädern (3) gestützt wird, mindestens ein Paar Querteile (13, 14), die dafür ausgelegt sind, die beiden Längsseiten in einer Höhe, die höher ist als die einer auf dem Boden liegenden Kiste (7), starr zu überbrücken, um **dadurch** einen Längstunnel zu begrenzen, mindestens einen Hebe- und Senkschacht (15) für mindestens eine Kiste (7) zwischen den Längsseiten, eine Hebe- und Senkeinrichtung (27, 48), die von dem Haltegestell oder Rahmen (2) an jedem Hebe- und Senkschacht getragen wird und die zwischen einer vollständig abgesenkten Position und einer vollständig angehobenen Position verschiebbar ist, und eine bewegliche Eingriffseinrichtung (20, 25; 51, 52; 51a, 52a; 55) für eine Kiste (7), die mit der Hebe- und Senkeinrichtung (27; 48) starr verschiebbar und dafür ausgelegt ist, mit einer Kiste (7) auf dem Boden im Hebe- und Senkschacht in Eingriff zu treten und sie in die Hebe- und Senkeinrichtung (27; 48) eingezwängt zu halten, wobei die in Eingriff befindliche Kiste in einer Höhe ist, die höher ist als die einer auf dem Boden liegenden Kiste (7), während die Hebe- und Senkeinrichtung in einer vollständig angehobenen Position ist, wobei das Fahrzeug ferner eine Antriebseinrichtung (30) für die Hebe- und Senkeinrichtung (27; 48) und die entfernbare Eingriffseinrichtung (20, 25; 51, 52; 51a, 52a; 55) und eine Steuereinheit (35) aufweist.

2. Fahrzeug nach Anspruch 1, **dadurch gekennzeichnet, daß** das Haltegestell oder der Rahmen (2) aufweist: zwei voneinander beabstandete Längsteile, von denen jedes mindestens ein sich in Längsrichtung erstreckendes Teil (8) aufweist, mindestens ein Paar Seitensäulen (9, 10) und mindestens ein jeweiliges Längselement (11, 12), das dafür ausgelegt ist, mit dem jeweiligen Paar Säulen (9 und 10) sowie mindestens mit den beiden Längselementen (13, 14) in starrer Verbindung zu sein, die dafür eingerichtet sind, die beiden Fahrzeugseiten zu überbrücken, um **dadurch** mindestens einen Hebe- und Senkschacht (15) für eine Kiste (7) zu begrenzen.

3. Fahrzeug nach Anspruch 2, **dadurch gekennzeichnet, daß** die Hebe- und Senkeinrichtung aufweist: mindestens einen Wagen oder Schlitten (18) an jeder Seite des Haltegestells (2), wobei der Wagen oder Schlitten (18) gleitfähig entlang eines jeweiligen Paares von Säulen (9; 10) angeordnet ist, mindestens ein Linearstellglied (27; 48), das dafür ausgelegt ist, zu bewirken, daß ein jeweiliger Wagen oder Schlitten (18) entlang eines jeweiligen Hebe- und Senkschachts (15) verschoben wird.

4. Fahrzeug nach Anspruch 3, **dadurch gekennzeichnet, daß** die entfernbare Eingriffseinrichtung zum Eingriff mit ei-ner Kiste (7) aufweist: ein Profilstabteil oder einen Bügel (20) mit einem Paar Schenkeln (20a, 20b), die sich senkrecht zueinander erstrecken und um eine Gelenkachse drehbar an einem jeweiligen Längselement (19) angeordnet sind, ein Linearstellglied (25) zum Steuern des Bügels (20), um einen Schenkel (20a) des Bügels (20) zwischen einer Ruheposition im wesentlichen ausgerichtet mit dem Längselement (19) und einer Arbeitsposition, in der sich der Schenkel (20a) in den Schacht (15) erstreckt, durch Winkeländerung zu bewegen.

5. Fahrzeug nach Anspruch 3, **dadurch gekennzeichnet, daß** die entfernbare Eingriffseinrichtung zum Eingriff mit einer Kiste (7) aufweist: ein Paar Stützen (51, 52; 51a, 52a), die in bezug auf ein entsprechendes Längsteil (19; 19a) drehbar sind, wodurch sie zwischen einer Arbeitsposition, die sich in einen Hebe- und Senkschacht erstreckt, und einer Ruheposition ausgerichtet mit ihrem jeweiligen Längselement (19, 19a) durch Winkeländerung verschiebbar sind, und ein Linearstellglied (55) für jedes Paar Stützen (51, 52; 51a, 52a).

6. Fahrzeug nach Anspruch 5, **dadurch gekennzeichnet, daß** jede Stütze (51, 52; 51a, 52a) durch mindestens eine Rückholfeder (53, 54) elastisch belastet ist.

7. Fahrzeug nach einem der vorhergehenden Ansprüche 2 bis 6, **dadurch gekennzeichnet, daß** jede Fahrzeugseite an einem jeweiligen sich in Längsrichtung erstreckenden Teil (8) um einen sich quer erstreckenden Drehgelenkzapfen (40) über ein sich in Längsrichtung erstreckendes dreiarmiges Hilfsteils (41) drehbar angeordnet ist, von dem zwei Enden mit jeweiligen Seitenwänden (9, 10) verbunden sind, während das Ende des dritten Arms mit einem Ende eines Linearstellglieds (43) gelenkig verbunden ist, dessen anderes Ende an dem sich in Längsrichtung erstreckenden Teil (8) drehbar verbunden ist, wobei das Linearstellglied (43) von der elektronischen Steuereinheit (35) gesteuert wird, die ihrerseits von einem Neigungsmesser gesteuert wird.

8. Fahrzeug nach einem der vorhergehenden Ansprüche, **dadurch gekennzeichnet, daß** es aufweist: eine automatische Kistenfüllvorrichtung (56) mit einem Absenkfördermittelkopf (57), der nicht höhenverstellbar ist, mindestens einem Förderband (58), das zum Fördern zu dem Fördermittelkopf (57) geeignet ist, und einer Antriebseinrichtung für den Fördermittelkopf (57) und das mindestens eine Förderband (58).

9. Fahrzeug nach Anspruch 8, **dadurch gekennzeichnet, daß** der Fördermittelkopf (57) aufweist: einen röhrenförmigen Körper (60), der dafür eingerichtet ist, sich über der Kiste (7) zu befinden, die in einem Hebe- und Senkschacht (15) plaziert ist, einen Sektor- oder Ständerfördermittel (61), das in dem röhrenförmigen Körper (60) angeordnet ist, und einen Sensor, der dafür ausgelegt ist, den Abstand zwischen dem in eine Kiste (7) eingebrachten Material und dem röhrenförmigen Körper (60) zu ermitteln, um die Hebe- und Senkeinrichtung zu steuern.

10. Fahrzeug nach einem der vorhergehenden Ansprüche, **dadurch gekennzeichnet, daß** er eine Auflageebene (70) für eine Kiste (7) aufweist, wobei die Auflageebene nahe einem Hebe- und Senkschacht (15) angeordnet ist, um eine Kiste (7) aus dem Schacht (15) in einer Höhe, die etwas weiter über dem Boden ist als die der Kiste (7), aufzunehmen.

11. Fahrzeug nach Anspruch 10, **dadurch gekennzeichnet, daß** die Auflageebene (70) eine Rollenanordnung aufweist.

12. Verfahren zum Handhaben von Kisten (7) mittels eines selbstfahrenden Fahrzeugs nach einem der vorhergehenden Ansprüche, mit den Schritten:
- Ineingriffbringen einer Kiste (7) und Anheben derselben vom Boden innerhalb eines Hebe- und Senkschachts (15),
- Anheben der Kiste (7) auf eine Höhe, die wesentlich höher ist als die einer auf dem Boden liegenden Kiste (7), um mindestens eine auf dem Boden liegende Kiste (7) nach dem Anhebevorgang überholen zu können, und
- Absenken der Kiste (7) von einer Höhe, die wesentlich höher ist als die einer auf dem Boden liegenden Kiste, nach dem Anhebevorgang und
- Plazieren der Kiste (7) auf dem Boden.

## Revendications

1. Un véhicule autopropulsé comprenant un châssis ou cadre de support (2), deux paires de roues (3) disposées sur les côtés opposés dudit châssis ou cadre de support (2), un appareil de direction (4) et un moyen d'entraînement (31) pour au moins une roue ou une paire de roues (3), et **caractérisé en ce que** ledit châssis ou cadre de support (2) comprend deux côtés longitudinaux, espacés l'un de l'autre, chacun d'entre eux étant supporté par une paire de roues respective (3), au moins une paire d'organes transversaux (13, 14) conçus pour relier de manière rigide lesdits deux côtés longitudinaux à un niveau plus élevé que celui d'une caisse (7) reposant sur le sol, et pour délimiter avec ceux-ci un tunnel longitudinal, au moins un arbre de levage-abaissement (15) pour au moins une caisse (7) entre lesdits côtés longitudinaux, un moyen de levage-abaissement (27, 48) étant transporté par ledit châssis ou cadre de support (2) au niveau de chaque arbre de levage-abaissement, et déplaçable entre une position totalement abaissée et une position totalement relevée, et un moyen d'engagement amovible (20, 25; 51, 52; 51a, 52a; 55) pour une caisse (7), qui est déplaçable de manière rigide avec ledit moyen de levage-abaissement (27; 48), et conçu pour engager une caisse (7) sur le sol au niveau de l'arbre de levage-abaissement, et la maintenir serrée contre ledit moyen de levage-abaissement (27; 48), grâce à quoi la caisse engagée est à un niveau plus élevé que celui d'une caisse (7) reposant sur le sol, tandis que le moyen de levage-abaissement est dans une position complètement relevé, le véhicule comprenant en outre un moyen d'entraînement (30) pour ledit moyen de levage-abaissement (27; 48) et ledit moyen d'engagement amovible (20, 25; 51, 52; 51a, 52a; 55), et une unité de commande (35).

2. Un véhicule selon la revendication 1, **caractérisé en ce que** ledit châssis ou cadre de support (2) comprend deux organes longitudinaux espacés l'un de l'autre, chacun d'entre eux comprend au moins un organe s'étendant longitudinalement (8), au moins une paire de montants latéraux (9, 10) et au moins un organe longitudinal respectif (11, 12) conçu pour se raccorder de manière rigide à la paire de montants (9 et 10) respective, ainsi qu'au moins auxdits deux organes longitudinaux (13, 14) disposés de manière à relier lesdits deux côtés du véhicule et à délimiter avec celui-ci au moins un arbre de levage-abaissement (15) pour une caisse (7).

3. Un véhicule selon la revendication 2, **caractérisé en ce que** ledit moyen de levage-abaissement comprend au moins un support ou une glissière (18) de chaque côté dudit châssis de support (2), ledit support ou glissière (18) étant monté de manière à pouvoir glisser le long d'une paire de montants (9; 10) respective, au moins un actionneur linéaire (27; 48) conçu pour provoquer un déplacement d'un support ou d'une glissière (18) respectifs le long d'un arbre de levage-abaissement (15) respectif.

4. Un véhicule selon la revendication 3, **caractérisé en ce que** ledit moyen d'engagement amovible pour engager une caisse (7) comprend un organe de barre profilée ou étrier (20) ayant une paire d'ailes (20a, 20b) s'étendant perpendiculairement l'un par rapport à l'autre, et qui pivotent autour d'un axe d'articulation par rapport à un organe longitudinal (19) respectif, un actionneur linéaire (25) pour commander ledit étrier (20) afin de déplacer angulairement une aile (20a) dudit étrier (20) entre une position de repos sensiblement alignée avec ledit organe longitudinal (19) et une position de travail, dans laquelle ladite aile (20a) s'étend à l'intérieur de l'arbre (15).

5. Un véhicule selon la revendication 3, **caractérisé en ce que** ledit moyen d'engagement amovible pour engager la caisse 7 comprend une paire de brides (51, 52; 51a, 52a) se pivotant par rapport à un organe longitudinal correspondant (19; 19a), étant par conséquent déplaçable de manière angulaire entre une position de travail s'étendant à l'intérieur d'un arbre de levage-abaissement, et une position de repos alignée avec son organe longitudinal respectif (19, 19a), et un actionneur linéaire (55) pour chaque paire de brides (51, 52; 51a, 52a).

6. Un véhicule selon la revendication 5, **caractérisé en ce que** chaque bride (51, 52; 51a, 52a) est chargée de manière élastique par au moins un ressort de rappel (53, 54).

7. Un véhicule selon l'une quelconque des revendications 2 à 6, **caractérisé en ce qu'**on fait pivoter chaque côté du véhicule par rapport à un organe s'étendant longitudinalement (8) respectif autour d'une broche pivotante transversale (40) au moyen d'un organe auxiliaire longitudinal à trois branches (41), ayant deux extrémités qui en dérivent raccordées à un montant (9, 10) respectif, alors que l'extrémité de sa troisième branche est articulée au niveau d'une extrémité d'un actionneur linéaire (43) dont on fait pivoter l'autre extrémité par rapport audit organe s'étendant longitudinalement (8), ledit actionneur linéaire (43) étant commandé par ladite unité de commande électronique (35), à son tour commandée par une jauge d'inclinaison.

8. Un véhicule selon l'une quelconque des revendications précédentes, **caractérisé en ce qu'**il comprend un chargeur automatique de caisse (56) comprenant une tête de transporteur d'abaissement (57) non réglable en hauteur, au moins une courroie de transport (58) appropriée pour le transport vers ladite tête de transporteur (57), et un moyen d'entraînement pour ladite tête de transporteur (57) et ladite au moins une courroie de transport (58).

9. Un véhicule selon la revendication 8, **caractérisé en ce que** ladite tête de transporteur (57) comprend un corps tubulaire (60) disposé de manière à être situé au-dessus de ladite caisse (7), placé dans un arbre de levage-abaissement (15), un transporteur à secteur ou à tasseaux (61) situé dans ledit corps tubulaire (60) et un capteur conçu pour détecter la distance entre le matériel chargé dans une caisse (7) et ledit corps tubulaire (60) pour commander ledit moyen de levage-abaissement.

10. Un véhicule selon l'une quelconque des revendications précédentes, **caractérisé en ce qu'**il comprend un plan de support (70) pour une caisse (7), ledit plan de support étant disposé de manière adjacente à un arbre de levage-abaissement (15) pour recevoir une caisse (7) à partir de l'arbre (15) à un niveau légèrement plus élevé au-dessus du sol que celui de la caisse (7).

11. Un véhicule selon la revendication 10, **caractérisé en ce que** ledit support de plan (70) comprend un ensemble de rouleaux.

12. Un procédé pour manipuler les caisses (7) au moyen d'un véhicule autopropulsé selon l'une quelconque des revendications précédentes, comprenant les étapes consistant à:
- engager une caisse (7) et l'élever du sol au moyen d'un arbre de levage-abaissement (15),
- lever ladite caisse (7) à un niveau sensiblement plus élevé que celui d'une caisse (7) reposant sur le sol, afin de pouvoir dépasser au moins une caisse (7) reposant sur le sol, après ladite opération de levage, et
- abaisser ladite caisse (7) à partir du niveau sensiblement plus élevé que celui d'une caisse reposant sur le sol, après ladite opération de levage, et
- placer ladite caisse (7) sur le sol.
